# EUROPEAN PATENT APPLICATION

(11) **EP 2 985 092 A1**
(43) Date of publication of application: **17.02.2016**
(21) Application number: 14180597.8
(22) Date of filing: 12.08.2014
(51) Int. Cl.: B21H 7/00, B21J 7/00, B21J 1/06

(54) **Tool and method for machining a winding**

(71) Applicant: ALSTOM Technology Ltd, 5400 Baden (CH)
(72) Inventor: Safari-Zadeh, Immanuel, 5504 Othmarsingen (CH)
(74) Representative: General Electric Technology GmbH

(57) **Abstract**

The present disclosure relates to a tool (1) and a method for machining a winding (12) for an electric machine and a use of such a tool. Disclosed is a tool (1) for machining a winding (12) for an electric machine, with a hammer or a movable wheel (4) supported by arms (5), the hammer or the movable wheel (4) are suitable for engaging and exerting pressure to the winding (12) to modify the height (h) and/or the surface structure of the winding, whereas the hammer conducts a bidirectional movement in the axial direction of the tool, whereas the wheel (4) conducts a bidirectional movement in the axial direction of the tool (1) and/or a rotating movement, whereas the tool further comprises a heat source (20) to apply heat to the winding (12).

## Description

The present disclosure relates to a tool for machining a winding for an electric machine, a method for machining a winding for an electric machine, and a use of a tool for machining a winding for an electric machine.

The electric machine is in particular a rotating electric machine such as a synchronous generator to be connected to a gas or steam turbine (turbogenerator) or a synchronous generator to be connected to a hydro turbine (hydro generator) or an asynchronous generator or a synchronous or asynchronous electric motor, transformers, or also other types of electric machines.

Windings of a coil are generally placed into notches or slots of a stator or rotor of an electric machine. Especially in the technical field of generators of high power generation these windings are prone to wear and maintenance is done for the generators. Part of this maintenance work is the replacement or repair of some of the manifold of windings, often done with welding or brazing of these parts. The maintenance work at the many windings is time consuming and expensive leading to down times of the generator not participating to the energy supply. Commonly, winding heads are connected via brazing of two half-windings being connected to a full winding thereby. Especially at the areas at which the half-windings are brazed the spaces at the winding head are narrow which leads to a need to use the available space in an efficient way.

An object of the invention is to provide a method and a tool to machine windings for an electric machine suitable for a space sensitive use at a winding head. Another object is to provide a fast and efficient method to machine windings. The object is solved with the features of the independent claims. Further examples of the invention are disclosed in the dependent claims.

Further characteristics and advantages will be more apparent from the description of a preferred but non-exclusive embodiment of the tool illustrated by way of nonlimiting example in the accompanying drawings, in which:
- Fig. 1: shows a schematic perspective view of three conductor bars or windings to be machined, whereas one conductor bar is placed in a backing, and a wheel above the conductor bar engaging the conductor bar;
- Fig. 2: shows an example of a bent conductor bar which is machined by a tool according to the invention on the left side and not machined by a tool according to the invention on the right side;
- Fig. 3: shows a perspective view of supports with an integrated counterpart and an attached plate, with a conductor bar to be machined;
- Fig. 4: shows a side view similar to Fig. 3 without the plate and without the conductor bar;
- Fig. 5: shows a side view similar to Fig. 4 with a plate attached to the supports and the integrated counterpart;
- Fig. 6: is a schematic side view of a tool with a movable wheel supported by two arms engaged to a winding between two supports, and a counterpart at the opposite side of the winding than the movable wheel;
- Fig. 7: is a schematic side view similar to Fig. 6 with a second movable wheel engaging the winding from two sides instead of the counterpart, whereas the wheels are movable in a bidirectional direction indicated by the double sided arrows;
- Fig. 8: shows a perspective view of an example of a tool according to the invention with a housing, u-shaped arms engaging a ceramic ball and a wheel designed around the ceramic ball;
- Fig. 9: shows a perspective view similar to Fig. 8 in operation with a conductor bar to be machined and a heat source to apply heat to the conductor bar;
- FIG. 10: shows a schematic side view similar to Fig. 9;
- Fig. 11: shows a schematic perspective view of an alternative example of the invention with a hammer instead of a wheel designed at one end with a structure of rills to modify the surface structure of the winding.

With reference to the figures, these show examples of the invention, wherein like reference numerals designate identical or corresponding parts throughout the several views.

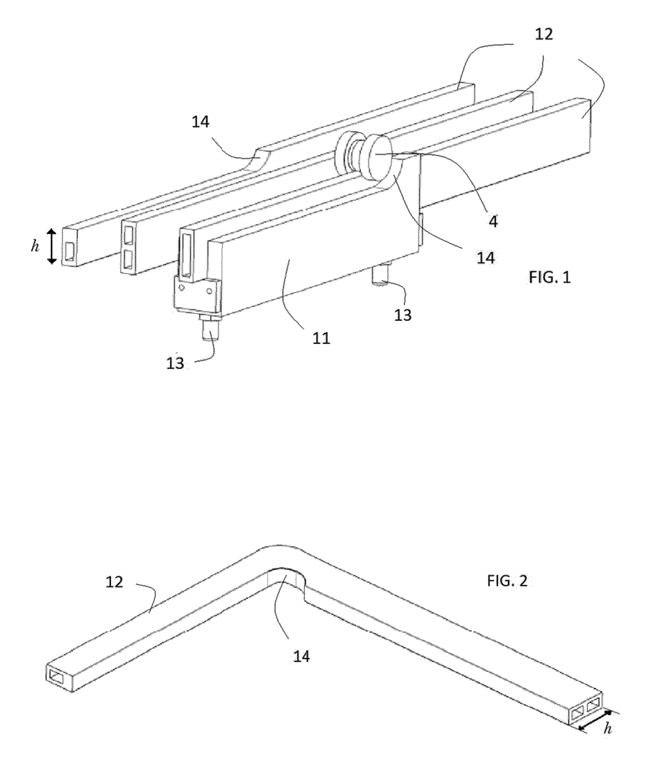

Fig. 1 shows a perspective view to the end of illustrating the principle of the tool 1 and the corresponding method. Shown are three parts of conductor bars or copper windings 12 next to each other. The windings 12 are shown in a cross-section and have usually a length of several metres. The windings 12 hereby are windings 12 of a rotor of a generator to produce power in the range of usually megawatts. In this certain example the rotor windings 12 have hollow profiles which are provided as ducts for a cooling medium to flow through in operation of the generator. The windings 12 are hollow conductors consequently. In the Figs the windings 12 are removed from the notches or slots of the rotor core for maintenance reasons and are thereby easily accessible. The height h of the left winding 12, hereby the size from below to above marked with an arrow, is lower than the height h of the windings 12 at the right side. The left winding 12 is machined by the tool 1 and thereby has a reduced height h. The right winding 12 is placed in a backing 11 securely holding the winding 12. A plate 15 finishes the backing 11 and serves as a bearing for the winding 12. The backing 11 rests on a feet 13 at the ground. In a schematic way a wheel 4 is shown above the right winding 12, whereas the wheel 4 is a part of a first example of the tool 1 to be described fully below. The wheel 4 can be made from a high tensile steel or a composite material or from a different material except aluminium or copper. In this example the wheel 4 is designed with an inner part having a smaller diameter than the outer part. With other words the wheel 4 contains two outer discs and a shaft 3 with a smaller diameter connecting the discs, similar in shape to a cable drum. The wheel 4 is part of the tool 1, driven and operated as is described below. The winding 12 can be fixed at the backing 11 or alternatively the winding 12 can be slipped along the backing 11. When the winding 12 is fixed and does not move the tool 1 is moved along the length of the winding 12 engaging the upper side of the winding 12. In the alternative, when the winding 12 moves in an axial direction to the centre line the tool 1 does not have to move along the winding 12.

Fig. 2 shows a perspective view of an example of a part of a winding 12 which is partly machined by a tool 1 according to the invention. At the left side, left from the bending, the winding 12 is machined and has a reduced height h compared to the height of the winding 12 right from the bending. It is visible that the right part of the winding 12 has two hollow chambers and the left machined part of the winding 12 has only one hollow chamber. This means the partition wall within the winding 12 between the two hollow chambers is removed after machining. One chamber is completely closed by application of heat by a heat source 20 and pressure to the small face or both small faces of the winding 12. A predefined temperature profile across the conductor winding 12 with a higher temperature on the face of the winding 12 to be shaped avoids undesired side effects. The bending of the winding 12 to an extend of approximately 90° has the purpose to use one end of the winding 12 as a so called end winding projecting from a notch or slot in the stator outwards with a specific angle. The bending can be achieved by different methods. One of these methods is to exert a pressure by the tool 1 and to conduct the tool 1 along a corresponding curve at the upper side in Fig. 2 with a specific bending degree. The winding 12 is in this alternative not only reduced in height h but also the shape of the winding 12 is changed to create an angle as shown in Fig. 2. Another method is to bend the winding 12 with a different bending device of the common state of the art.

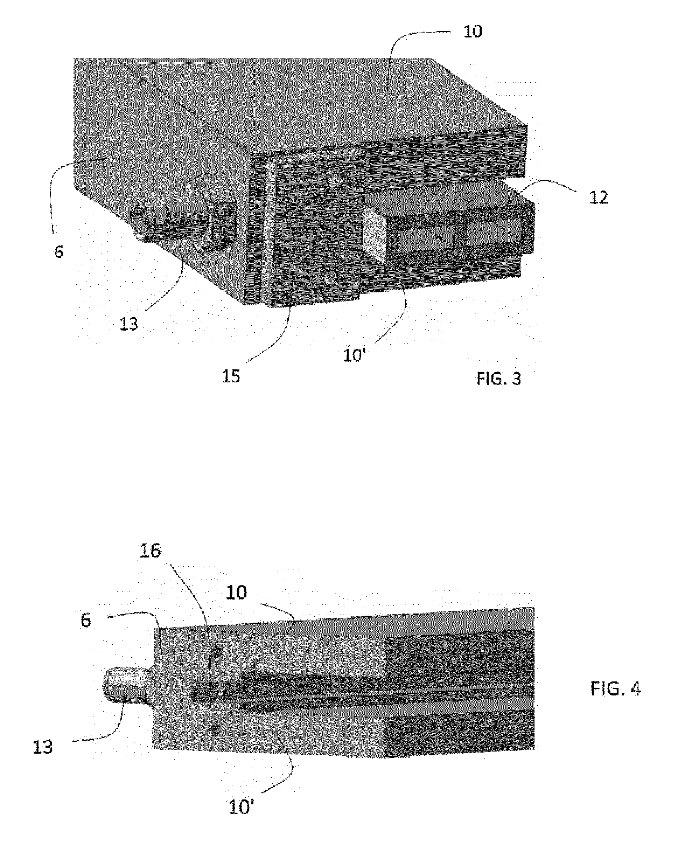

Fig. 3 shows a perspective view of supports 10, 10' with an integrated counterpart 6 connected in one piece. The supports 10, 10' and the counterpart 6 form a u-shape to house the winding 12. The view of Fig. 3 is skipped for 90° to the right, the foot 13 is correspondingly at the left face of the counterpart 6. The plate 15 is fixed by screws to each support 10, 10' and bridges the supports 10, 10'. The plate 15 has approximately the length of the distance of the outer faces of the two supports 10, 10', as can be seen in Fig. 3. The plate 15 is suitable for bearing the winding 12 between the supports 10, 10'.

Fig. 4 shows a perspective view similar to Fig. 3 with the supports 10, 10' and the counterpart 6 rotated and the plate 15 and the winding 12 removed. Visible is the rectangular recess formed by the supports 10, 10' below and above and the counterpart 6 behind to include the winding 12. There is a rectangular channel 7 formed in the counterpart 6 which is smaller than the distance between the inner faces of the supports 10, 10'.

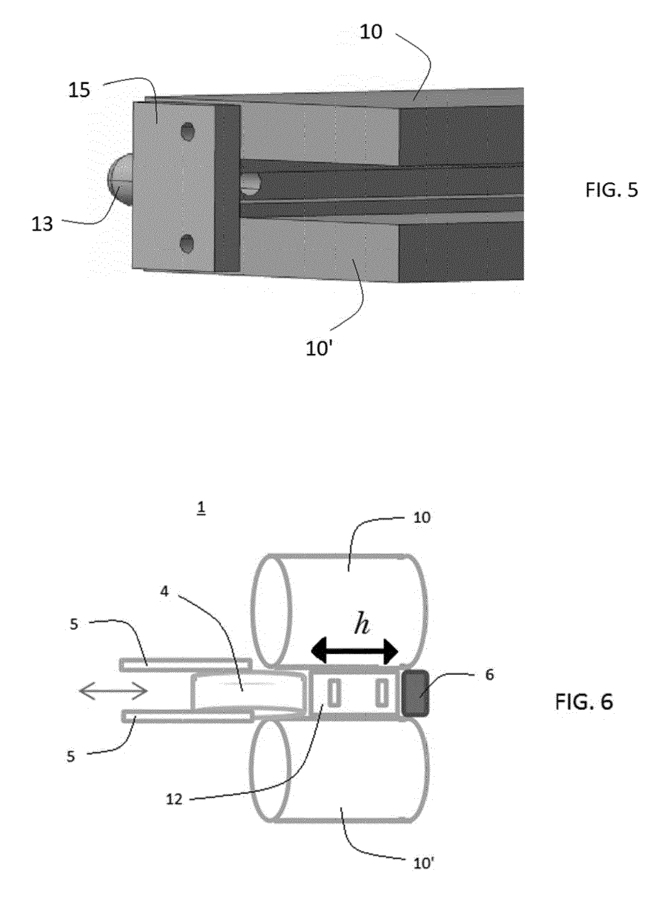

Fig. 5 illustrates a view similar to Fig. 4, whereby the plate 15 is attached to the supports 10, 10' and counterpart 6 at the left side in this skipped view. The configuration of the supports 10 10' with an attached plate 15 is the same as the configuration of Fig. 3.

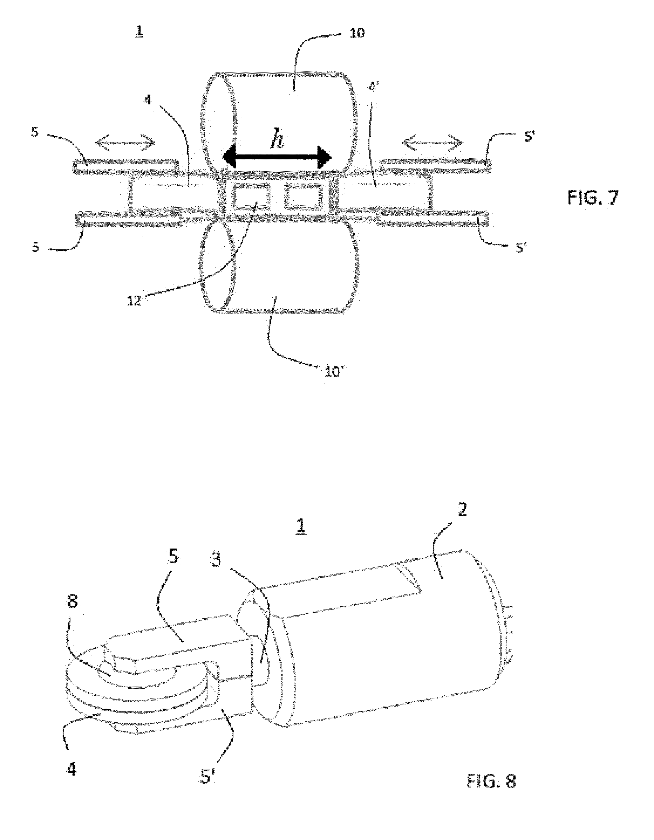

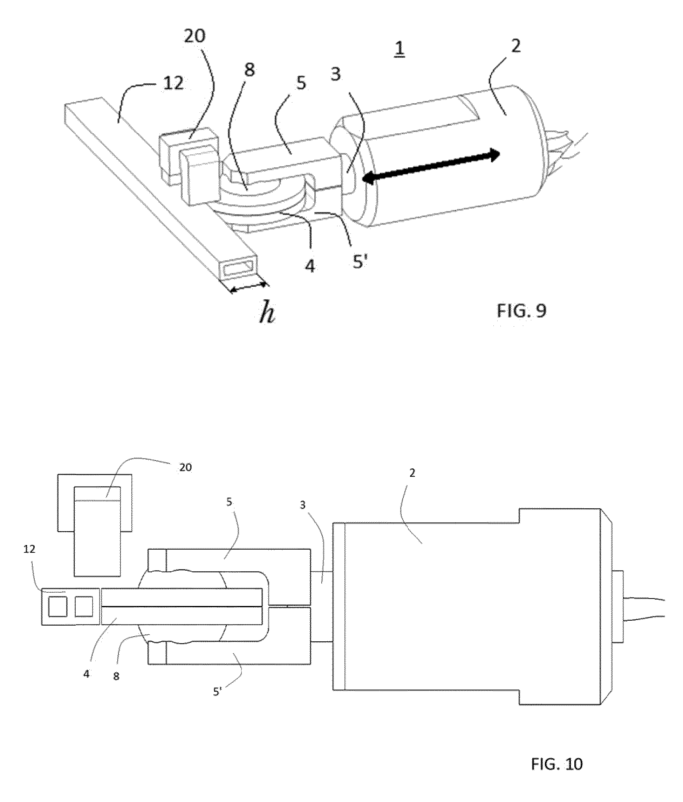

Fig. 6 is a schematic side view of a further example of a tool 1 according to the invention. The supports 10, 10' are designed as rollers in this example. Operating the rollers and rotating the rollers transports the winding 12 in the direction into the image plane. The tool 1 can keep the position in the direction into the image plane in this example. The supports 10, 10' are adjusted to the upper and lower end of the winding 12 which is fixed between the supports 10, 10'. In this example the supports 10, 10' have a cylindrical shape and are adapted to fix the winding 12 between them. The winding 12 is shown in a cross-section and has usually a length of several metres. The winding 12 hereby is a winding 12 of a rotor of a generator to produce power in the range of usually megawatts. In this certain example the rotor winding 12 has two hollow profiles which are provided as ducts for a cooling medium to flow through in operation of the generator. In the Figs the winding 12 is removed from the notches of the rotor core for maintenance reasons and is therefore easily accessible. The tool 1 is brought adjacent to the winding 12 which is shown in a schematic way comprising the rotating wheel 4 which has said arms 5, 5' to support the wheel 4. The arms 5 are connected via an axis projecting through a hole or bushing in the wheel 4. The rotary bushing can be supplied by graphite powder or special alloys (e.g. Graphalloy) providing a long service time before maintenance is necessary. Alternatively, the wheel 4 can be attached to a ball 8 as a suspension as is described below in more detail. The axis of the movable wheel 4 is driven by an electric motor (not shown) comprised by the tool 1. The electric motor and the ends of the arms 5, 5' far from the rotatable wheel 4 are accommodated in a housing 2, as can be seen in Figs 8, 9. The material of the rotating wheel 4 can be high strength, high tensile, high temperature steel. Alternatively, the material of the rotating wheel 4 can be a composite material. The breadth of the rotatable wheel 4 is adjusted to fit between the supports 10, 10' without touching the supports 10, 10' in operation and impairing the running of the movable wheel 4 and damaging it. As is shown in Fig. 6 the counterpart 6 is positioned abut on the winding 12 at the opposite side of the rotating wheel 4. The counterpart 6 is separate from the supports 10, 10' in this example, not fabricated one-piece with the supports 10, 10'. The wheel 4 exerts a force at the winding 12 and by this force the shape of the winding 12 is changed, especially the height h of the winding 12 is reduced. In the top perspective shown the height h is the expansion from left to right correspondingly, indicated by the arrow. The breadth of the winding 12 is not changed as the supports 10, 10' exert forces from the lower and upper side in this view. The reduction in height h is especially useful as the space for housing the winding 12 in the generator is limited and to be kept small. This is especially important in repair works at the generator in which parts of the windings 12 or half-windings are replaced, the so called rewinding of the generator. By application of force to the winding 12 for a certain time it is achieved a reshape of the rotor winding profile. The reshape of the winding 12 is done until the best suitable dimensional match to the foreseen task is achieved. One advantage hereby is that the method does not remove any material from the winding 12. This means the volume of the winding 12 is reduced without a loss of material. In an example of the invention the movable wheel 4 of the tool 1 is designed with an imbalance thus performing an oscillation of the rotating wheel 4. By this means the force is applied to the winding 12 as a kind of hammering with low amplitude. This means the wheel 4 conducts a bidirectional movement in the axial direction of the tool, indicated by the double sided arrow at the left. This hammering movement may be the only movement the wheel 4 conducts. In a different example the wheel 4 additionally conducts a rotating movement around its axis. The third application is that the wheel 4 only conducts a rotating movement without a hammering or bidirectional movement. In addition to the force applied, heat and pressure is applied by the tool 1. To this end the tool 1 comprises a heat source 20, described under Fig. 9. The temperature range of this heat application can be between 250°C to 900°C, preferably 500°C. The heat source 20 can be integrated in the tool 1 and can be based on high frequency induction, high current resistive or direct (short) flame, e.g. by burning of fuel in a tank comprised by the tool 1. In a further example the tool 1 comprises a chemical tank to apply a chemical substance to the winding 12. The heat source 20 can also comprise a plasma torch. In an alternative the heat source 6 is a separate part of the tool 1. By application of an anti-friction agent the sliding of the surface of the rotating wheel 4 along the surface of the winding 12 is facilitated. In a further example rills or a template is engraved or imprinted into the wheel 4 or roller to the end of imprinting the corresponding form or figure of the rills or template into the surface of the conductor winding 12. To this end of imprinting the winding 12 the tool 1 is designed in the hammering mode described above with a fixed wheel 4. The imprinting of rills or a template leading to an uneven and structured surface can be useful for example to enlarge the cooling surface of the conductor winding 12 and thus to improve the cooling properties. Another aspect of this feature is to imprint rills into the winding 12 which are suitable to engage to spacers (not shown). These spacers are commonly placed between windings 12 to create a distance space between the windings 12. Applying these rills for the spacers improves the mechanical properties of the windings 12 with attached spacers.

The tool 1 is in an example equipped with at least one sensor suitable for measuring the speed of the movable wheel 4. An optional microcontroller is comprised by the tool 1 to control the speed measured by the sensor. The speed control of the tool 1 improves the quality and speediness of the method of machining the winding 12.

The tool 1 can be manufactured as a portable or handheld device. To this end the tool 1 has a grip projecting from the housing 2 by which an operator can carry and handle the tool 1 with both hands. As a handheld tool 1 the service scope is extended and the tool 1 is employed in a flexible way. Alternatively, the tool 1 is part of a robotized automation system. As part of this the tool 1 is embedded in a frame resting on the bottom with rolls to move the system to the place of work. Designed as an automation system the operator has not to carry the tool 1 but only to operate the automation system.

Fig. 7 shows a schematic side view similar to Fig. 6 with a second rotatable wheel 4' engaging the winding 12 from the opposite side of the winding 12 than the first rotating wheel 4 engaging from the left. The second rotatable wheel 4' having also arms 5' supporting the second rotatable wheel 4' and replacing the counterpart 6 in the first example under Fig. 1. In the configuration of Fig. 7 two equal tools 1 are provided accordingly which shape the winding 12 in between from both sides.

Another example for achieving a variable sweep curve for the compressed hollow conductor, namely the winding 12, is to apply at least two rotating counter wheels 4' next to each other instead of one shown in Fig. 7. The two rotating counter wheels 4' (not shown) have variable amplitudes and/ or frequencies. All examples described provide a high speed machining of windings 12 to reduce the volume of the windings 12 by reducing the height h of the winding 12 along the length and allow to reduce down times of the generator.

Fig. 8 shows a perspective view of an example of the tool 1 which can be handled manually by an operator. The tool 1 comprises a housing 2 to accommodate an electric motor with a power in the range of several kilowatts. The motor drives via a shaft 3 and the arms 5, 5' a ball 8 made from ceramic in this example. The wheel 4 is hereby securely fixed to the ceramic ball 8 and thus follows the movement of the ceramic ball 8. The movement of the wheel 4 is corresponding to the other examples a bidirectional movement and/ or a rotational movement.

Fig. 9 illustrates a perspective view similar to Fig. 8 showing the tool 1 in an operation mode. The tool 1 travels along the small face of a hollow conductor, a part of the winding 12. The wheel 4 of the tool 1 is moved as described. Above the winding 12 the heat source 20 is mounted to apply heat to the winding 12. The application of heat by the heat source 20 and pressure by the driven wheel 4 leads to an even deformation of the rectangular winding 12, such that the height h is reduced essentially without deforming the other faces of the winding 12. In this view again the height h is the dimension from left to right. A substantial reduction of the volume of the winding 12 is achieved to fulfil the requirements of little space available in big size electric machines.

Fig. 10 shows a schematic side view of a tool 1 according to the example of Fig. 9. Here, especially the configuration of the ceramic ball 8 partly surrounded by the wheel 4 and attached to the wheel 4 is illustrated. To fabricate the ceramic ball 8 with the wheel 4, the wheel 4 has an opening in the middle which has a slightly smaller diameter than the diameter of the ball 8. The wheel 4 further is longitudinally divided in two sections.

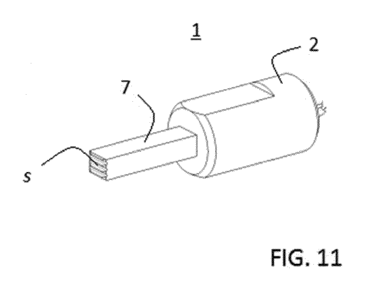

Fig. 11 shows a schematic perspective view of an alternative example of the inventive tool 1. The tool 1 hereby has a hammer 7 serving for engaging to the winding 12. In the contrary to the examples above no wheel 4 supported by arms 5, 5' is provided, the machining function is fulfilled by the hammer 7. The hammer 7 has a rectangular cross-section in this example. The hammer 7 conducts a bidirectional movement in the axial direction of the tool 1, no rotational movement is conducted hereby. Similar to the wheel 4 in the examples above the hammer 7 is at least at the front side made from a high tensile steel or a composite material or from a different material. The hammer 7 is designed at the far front end plane with a structure of rills embossed or stamped into the plane. In Fig. 11 three elevations are shown creating a rill between each elevation. This means the front end of the hammer 7 has a surface structure s. By a controlled movement of the tool 1 or the winding 12 the surface structure s of the hammer 7 transfers the rills or templates into the winding 12. Thus, the surface structure of the winding 12 is modified correspondingly at the face at which the tool 1 is applied. As in the examples above a heat source 20 is applied correspondingly to apply heat to the winding 12. The imprinting of rills or a template leading to a structured surface of the winding 12 can be useful for example to enlarge the cooling surface of the conductor winding 12 and thus to improve the cooling properties. Another aspect of this feature is to imprint rills into the winding 12 which are suitable to engage to spacers (not shown). These spacers are used to ensure a certain distance between several adjacent windings 12.

The tool 1 achieves as a main issue in connection with retrofit the increase of the power to volume ratio by shortening the end regions of the winding 12. Next to the reduction of the height h a reduction of the bending radii of the windings 12 is achieved to reduce the volume and to make the electric machine or rotor more compact. The invention allows to avoid any fused parts or removal of material from the winding 12.

While the invention has been described in detail with reference to exemplary embodiments thereof, it will be apparent to one skilled in the art that various changes can be made, and equivalents employed, without departing from the scope of the invention. The foregoing description of the preferred embodiments of the invention has been presented for purposes of illustration and description. It is not intended to be exhaustive or to limit the invention to the precise form disclosed, and modifications and variations are possible in light of the above teachings or may be acquired from practice of the invention. The embodiments were chosen and described in order to explain the principles of the invention and its practical application to enable one skilled in the art to utilize the invention in various embodiments as are suited to the particular use contemplated. It is intended that the scope of the invention be defined by the claims appended hereto, and their equivalents. The entirety of each of the aforementioned documents is incorporated by reference herein.

### REFERENCE NUMBERS

- Tool: 1
- Housing: 2
- Shaft: 3
- Wheel: 4, 4'
- Arms: 5, 5'
- Counterpart: 6
- Ball or ceramic ball: 8
- Supports: 10, 10'
- Backing: 11
- Winding: 12
- Feet: 13
- Slope: 14
- Plate: 15
- Channel: 16
- Heat source: 20

## Claims

1. A tool (1) for machining a winding (12) for an electric machine, with a hammer (7) or a movable wheel (4, 4') supported by arms (5, 5'), the hammer (7) or the movable wheel (4, 4') are suitable for engaging and exerting pressure to the winding (12) to modify the height h and/or the surface structure of the winding (12), whereas the hammer (3) conducts a bidirectional movement in the axial direction of the tool (1), whereas the wheel (4, 4') conducts a bidirectional movement in the axial direction of the tool (1) and/or a rotating movement, whereas the tool (1) further comprises a heat source (20) to apply heat to the winding (12).

2. The tool (1) according to claim 1, **characterized in that** the tool (1) with the hammer (7) or the wheel (4, 4') is movable in a direction along the winding (12) and in a direction perpendicular to the winding (12) along the axis of the wheel (4, 4').

3. The tool (1) according to claim 1, **characterized in that** heat source (20) produces and applies heat to the winding (12) in the range from 250°C to 900°C, preferably approximately 500°C.

4. The tool (1) according to claim 3, **characterized in that** the heat source (20) is operated by high frequency induction, high current resistive, or a flame.

5. The tool (1) according to claim 1, **characterized in that** the hammer (7) or the movable wheel (4, 4') oscillate in the axial direction of the tool (1) creating a hammering effect to the winding (12) due to the oscillation.

6. The tool (1) according to claim 1, **characterized in that** the tool (1) is part of a robotized automation system.

7. The tool (1) according to claim 1, **characterized in that** the tool (1) is a handheld tool (1) to be operated by an operator.

8. The tool (1) according to claim 1, **characterized in that** the tool (1) comprises a counterpart (6) to create a counterforce to the winding (12) at the opposite side of the movable wheel (4, 4').

9. The tool (1) according to claim 8, **characterized in that** the counterpart (6) is a second movable wheel (4').

10. The tool (1) according to claim 1, **characterized in that** the surface of the hammer (7) comprises rills or templates to be imprinted into the winding (12).

11. The tool (1) according to claim 10, **characterized in that** the rills in the surface structure of the hammer (7) imprint rills into the winding (12) suitable to engage to spacers placed longitudinal between two windings (12).

12. Method for machining a winding (12) for an electric machine, the method comprising the steps of placing a winding (12) between supports (10, 10'), engaging at least one side of the winding (12) with a moving hammer (7) or moving wheel (4, 4'), and shaping the winding (12) by means of the force applied by the moving hammer (7) or moving wheel (4, 4').

13. Method for machining a winding (12) for an electric machine according to claim 12, **characterised in** placing a counterpart (6) at the opposite side of the winding (12) to apply a counterforce to the force applied by the moving hammer (7) or moving wheel (4, 4').

14. Method for machining a winding (12) for an electric machine according to claim 13, **characterised in** shaping the opposite side of the winding (12) with a second moving wheel (4') at the same time.

15. Use of a tool (1) according to claim 1 for machining a winding (12) for an electric machine.

## Amended claims

### Amended claims in accordance with Rule 137(2) EPC.

1. A tool (1) for shaping a conductor bar (12) for an electric machine, with a hammer (7) or a movable wheel (4, 4') supported by arms (5, 5'), the hammer (7) or the movable wheel (4, 4') are suitable for engaging and exerting force to the conductor bar (12) to modify the height h and/or the surface structure of the conductor bar (12), whereas the hammer (3) conducts a bidirectional movement in the axial direction of the tool (1), whereas the wheel (4, 4') conducts a bidirectional movement in the axial direction of the tool (1) and/or a rotating movement, whereas the tool (1) further comprises a heat source (20) to apply heat to the conductor bar (12) in the range from 250°C to 900°C.

2. The tool (1) according to claim 1, **characterized in that** the tool (1) with the hammer (7) or the wheel (4, 4') is movable in a direction along the conductor bar (12) and in a direction perpendicular to the conductor bar (12) along the axis of the wheel (4, 4').

3. The tool (1) according to claim 1, **characterized in that** heat source (20) produces and applies heat to the conductor bar (12) of approximately 500°C.

4. The tool (1) according to claim 3, **characterized in that** the heat source (20) is operated by high frequency induction, high current resistive, or a flame.

5. The tool (1) according to claim 1, **characterized in that** the hammer (7) or the movable wheel (4, 4') oscillate in the axial direction of the tool (1) creating a hammering effect to the conductor bar (12) due to the oscillation.

6. The tool (1) according to claim 1, **characterized in that** the tool (1) is part of a robotized automation system.

7. The tool (1) according to claim 1, **characterized in that** the tool (1) is a handheld tool (1) to be operated by an operator.

8. The tool (1) according to claim 1, **characterized in that** the tool (1) comprises a counterpart (6) to create a counterforce to the conductor bar (12) at the opposite side of the movable wheel (4, 4').

9. The tool (1) according to claim 8, **characterized in that** the counterpart (6) is a second movable wheel (4').

10. The tool (1) according to claim 1, **characterized in that** the surface of the hammer (7) comprises rills or templates to be imprinted into the conductor bar (12).

11. The tool (1) according to claim 10, **characterized in that** the rills in the surface structure of the hammer (7) imprint rills into the conductor bar (12) suitable to engage to spacers placed longitudinal between two conductor bars (12).

12. Method for shaping a conductor bar (12) for an electric machine, the method comprising the steps of placing a conductor bar (12) between supports (10, 10'), engaging at least one side of the conductor bar (12) with a moving hammer (7) or moving wheel (4, 4'), and shaping the conductor bar (12) by means of the force applied by the moving hammer (7) or moving wheel (4, 4').

13. Method for shaping a conductor bar (12) for an electric machine according to claim 12, **characterised in** placing a counterpart (6) at the opposite side of the conductor bar (12) to apply a counterforce to the force applied by the moving hammer (7) or moving wheel (4, 4').

14. Method for shaping a conductor bar (12) for an electric machine according to claim 13, **characterised in** shaping the opposite side of the conductor bar (12) with a second moving wheel (4') at the same time.

15. Use of a tool (1) according to claim 1 for shaping a conductor bar (12) for an electric machine.
